# EUROPEAN PATENT SPECIFICATION

(11) **EP 4 346 526 B1**
(45) Date of publication and mention of the grant of the patent: **22.10.2025**
(21) Application number: 22700257.3
(22) Date of filing: 13.01.2022
(51) Int. Cl.: A47J 41/00, A47G 19/22, B65D 47/28, B65D 43/02, B65D 81/38

(54) **CAP UNIT AND CONTAINER WITH CAP**
VERSCHLUSSEINHEIT UND BEHÄLTER MIT VERSCHLUSS
COUVERCLE ET RÉCIPIENT AVEC COUVERCLE

(30) Priority: 25.05.2021 JP 2021087781
(43) Date of publication of application: 10.04.2024
(73) Proprietor: Thermos K.K., Tsubame-shi, Niigata-ken (JP); Thermos L.L.C., Schaumburg, IL 60173 (US)
(72) Inventor: ITO, Kei, Yoshida-Shimonakano Tsubame-shi Niigata-ken (JP); MATSUYAMA, Shin, Yoshida-Shimonakano Tsubame-shi Niigata-ken (JP)
(74) Representative: Barker Brettell LLP
(86) International application number: PCT/IB2022/050255
(87) International publication number: WO 2022/248942

(56) References cited:
- JP-U- S59 159 548
- KR-A- 20190 089 302
- US-B2- 10 870 522

## Description

The present invention relates to a cap unit and a container with a cap.

### BACKGROUND ART

A container with a cap provided with a cap unit (plug body) which is detachably attached to a mouth/neck portion of a container body having an upper opening to close the upper opening of the container body is conventionally known (for example, Patent Document 1 below).

For example, Patent Document 1 below discloses a structure which includes a cap body which closes the upper opening of the container body and has a liquid passage port on the front upper part, and a lid which opens and closes the liquid passage port while being slidably attached in the front-back direction of the cap body, wherein the lid is held in the cap body at a position at which the liquid passage port is closed by engaging an elastic click portion provided with the lid into a click receiving portion provided with the cap body,

### PRIOR ART DOCUMENTS

Patent Document 1 Japanese Unexamined Patent Application, First Publication No. 2015-166258
KR 2019 0089302 relates to a bottle cap which opens and closes an outlet by reciprocation of a sliding opening/closing part by installing the sliding opening/closing part to allow the sliding opening/closing part to reciprocate while sliding on an upper surface of a bottle cap.

### PROBLEM TO BE SOLVED BY THE INVENTION

In the cap unit disclosed in Patent Document 1 above, a pair of elastic click portions are provided so as to be elastically deformable by cutting out both side surfaces of the lid body in the width direction in accordance with the shape of the elastic click portions.

However, in the cap unit disclosed in Patent Document 1, when the lid body is removed from the cap body for cleaning, it is difficult for the lid body to be attached to or detached from the cap body. Further, not only is it difficult to clean the gap (notch portion) formed between the elastic click portion and the elastic click portion, but also the shape of the mold forming the elastic click portion is complicated.

The present invention has been proposed in view of such conventional circumstances. An object of the present invention is to provide a cap unit capable of easily attaching and detaching a lid to and from a cap body while having a simple structure, and a container with a cap which has improved usability by providing such a cap unit.

### MEANS FOR SOLVING THE PROBLEM

In order to achieve the objects, the present invention provides a cap unit according to claim 1 and a container according to claim 8.
[1] A cap unit which can be detachably attached to the container body with an upper opening, including:
   a cap body which closes the upper opening of the container body and is provided with a liquid passage port in an upper part on the front side;
   a lid which opens and closes the liquid passage port while being slidably attached to the cap body; and
   a lid opening/closing mechanism which holds the lid which slides between a closing position at which the lid closes the liquid passage port and an opening position at which the lid opens the liquid passage port in the closing position and the opening position,
   wherein the lid opening/closing mechanism includes:
      a pair of plungers protruding from both sides in the width direction of the lid; and
      a pair of guide grooves which are located on both sides of the cap body in a width direction sandwiching the lid, and slidably guide the cap body in a state in which the pair of plungers are detachably engaged with the pair of guide grooves, wherein the lid is arranged so as to slide in a front-rear direction of the cap body, wherein the lid opening/closing mechanism includes a pair of front locking portions which are located on a front end side of the pair of guide grooves and lock the pair of plungers, and a pair of rear locking portions which are located on a rear end side of the pair of guide grooves and lock the pair of plungers,
      the lid is held at the closing position by locking the pair of plungers in the front locking portions, and
      the lid is held at the opening position by locking the pair of plungers in the rear locking portions.
[4] The cap unit, wherein the cap body includes a guide recess which cuts out an upper portion of the lid including the liquid passage port in the front-rear direction with a width corresponding to the width of the lid, and
   the lid is slidably attached in the front-rear direction of the cap body while being arranged in the guide recess.
[5] The cap unit wherein the lid has a shape which is flush with the cap body in a state of being arranged inside the guide recess.
[6] The cap unit wherein the liquid passage port has a shape which has a width corresponding to a width of a bottom surface of the guide recess, becomes narrower than the width of the bottom surface of the guide recess in the middle, and a length of the narrowly opened portion is longer than a length of the portion having the width corresponding to the width of the bottom surface of the guide recess.
[7] The cap unit wherein the lid is slid by an operation convex portion which is provided on the upper portion of the lid.
[8] The cap unit wherein the lid is partially overlapped with the liquid passage port at the opening position.
[9] The cap unit wherein the lid has a symmetrical shape in the front-rear direction, and the lid is freely attached to the guide recess in the front-rear direction.
[10] A container with a cap including the cap unit according to claim 1, and a container body to which the cap unit is attached.
[11] The container as above-mentioned, wherein the container body has a vacuum heat insulating structure.

### EFFECTS OF THE INVENTION

As explained above, according to the present invention, it is possible to provide a cap unit capable of easily attaching and detaching a lid to and from a cap body while having a simple structure, and a container with a cap which has improved usability by providing such a cap unit.

### BRIEF DESCRIPTION OF DRAWINGS

FIG. 1 is a perspective view showing a state in which a lid is in a closing position in a container with a cap provided with a cap unit according to an embodiment of the present invention.
FIG. 2 is a perspective view showing a state in which a lid is in an opening position in a container with a cap.
FIG. 3 is a cross-sectional view showing a state in which a lid is in a closing position in a container with a cap.
FIG. 4 is a cross-sectional view showing a state in which a lid is in an opening position in a container with a cap.
FIG. 5 is an exploded perspective view of a cap unit as viewed from above.
FIG. 6 is an exploded perspective view of a cap unit as viewed from below.
FIG. 7 is a cross-sectional perspective view showing a state in which a lid is between a closing position and an opening position in a cross section of a cap unit shown by a line C-C in FIGS. 3 and 4.
FIG. 8 is a cross-sectional perspective view showing a state in which a lid is in a closing position in a cross section of a cap unit shown by a line C-C in FIG. 3.
FIG. 9 is a cross-sectional perspective view showing a state in which a lid is in an opening position in a cross section of a cap unit shown by a line C-C in FIG. 4.

### DETAILED DESCRIPTION OF THE PREFERRED EMBODIMENTS

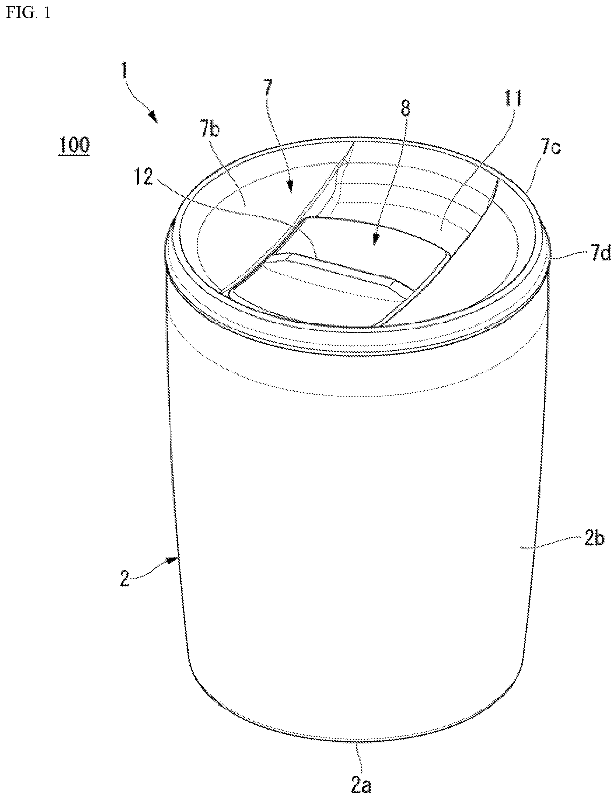

Hereinafter, embodiments of the present invention will be disclosed in detail with reference to the drawings.
As an embodiment of the present invention, for example, a container with a cap 100 including a cap unit 1 shown in FIGS. 1 to 9 will be disclosed.

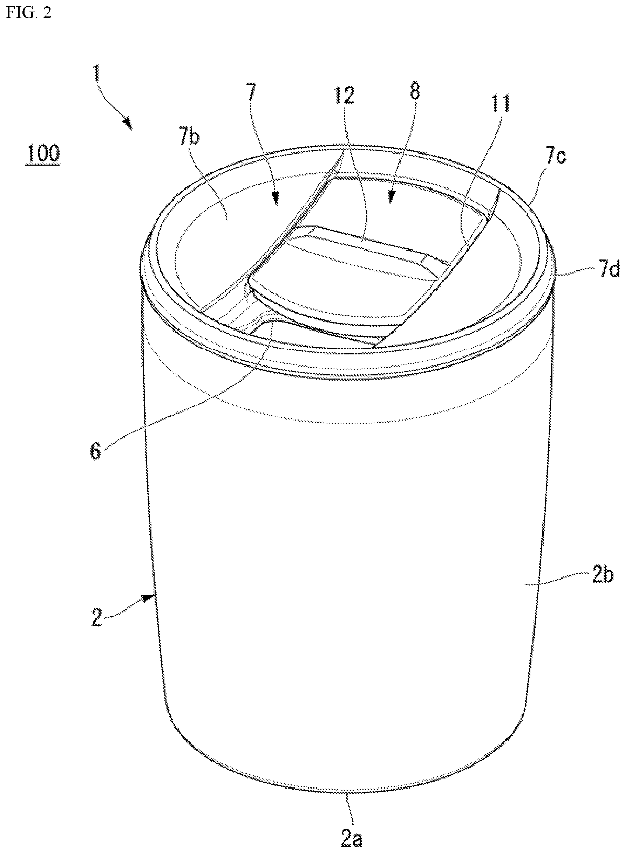

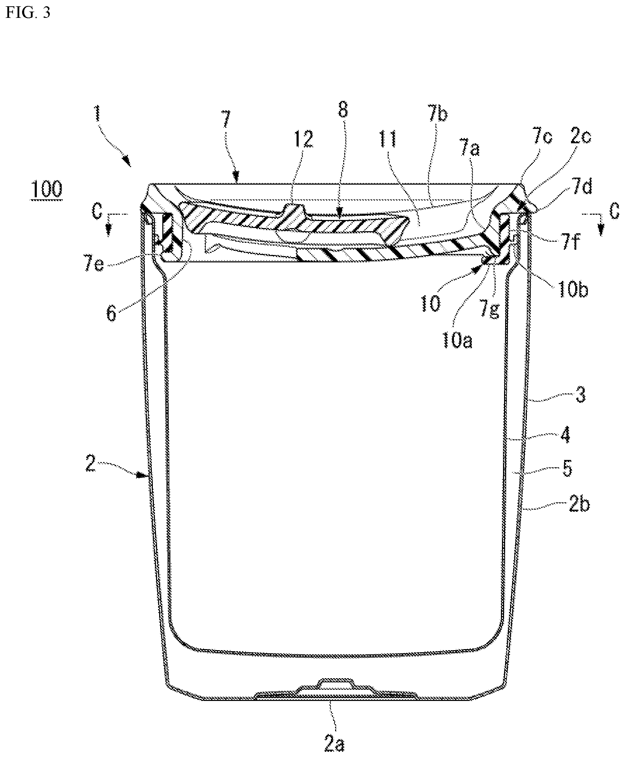

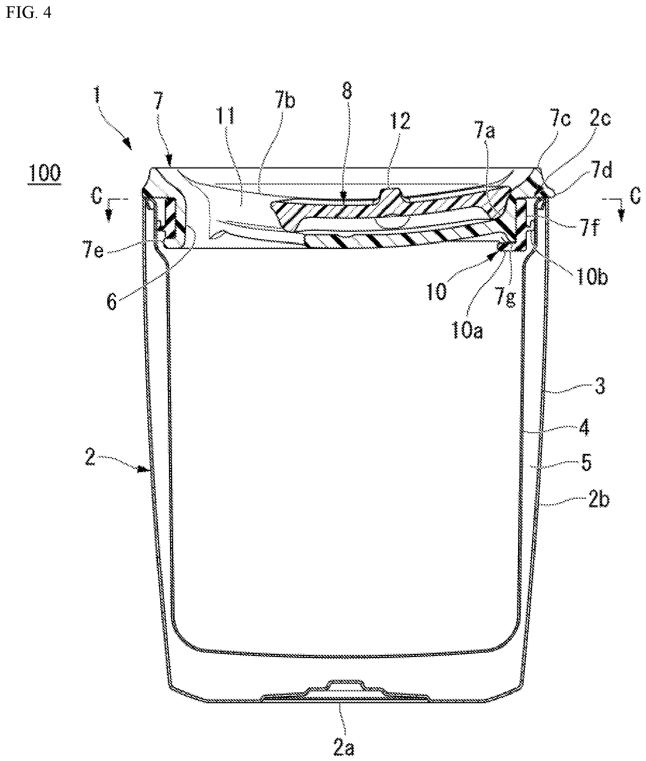

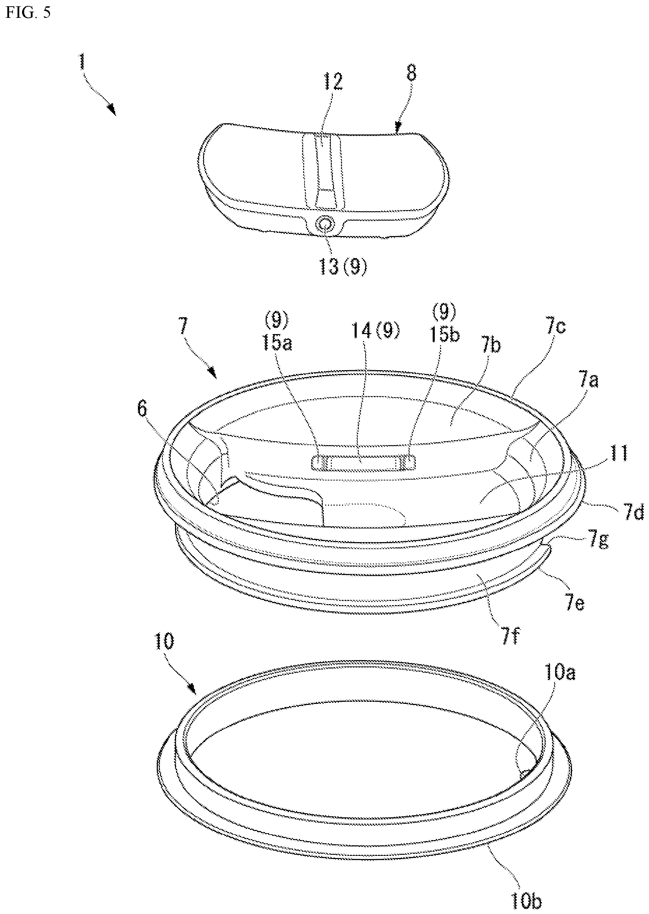

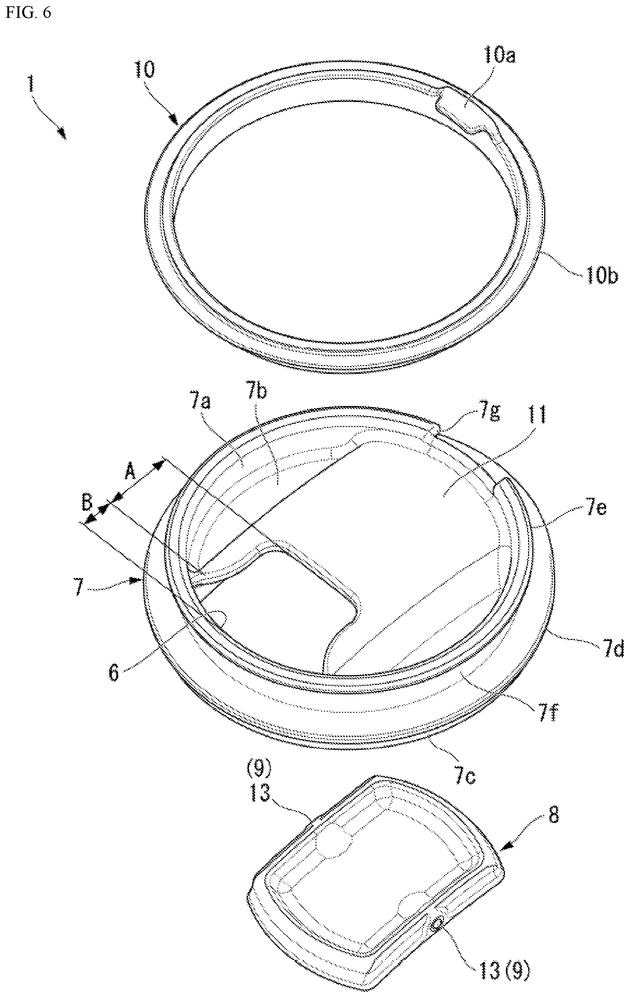

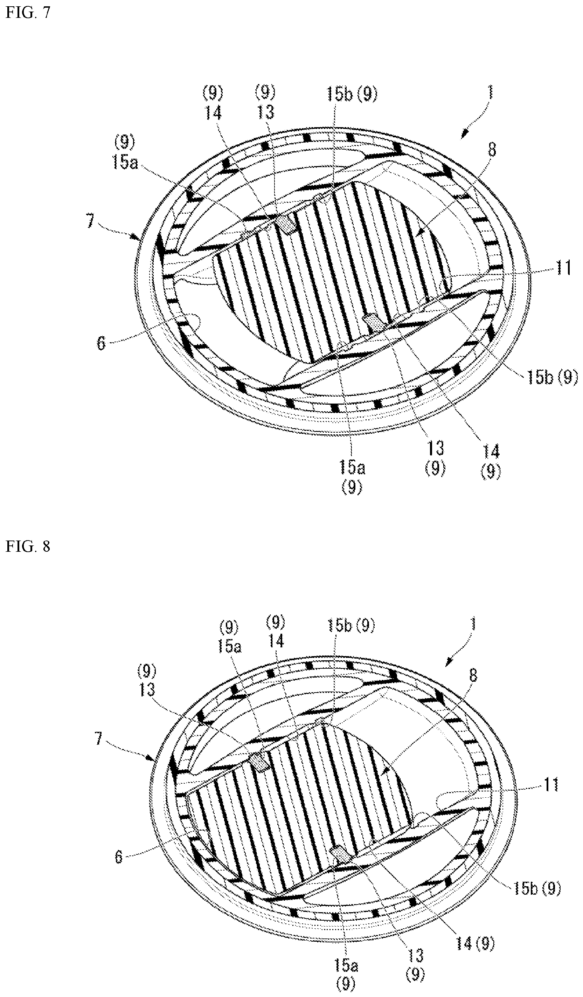

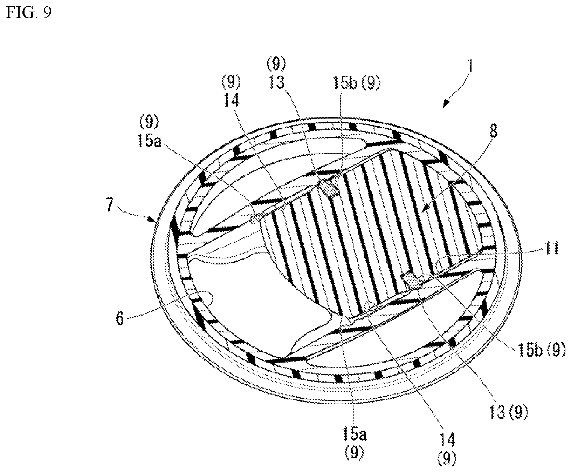

FIG. 1 is a perspective view showing a state in which a lid 8 is in a closing position in a container 100 with a cap provided with a cap unit 1. FIG. 2 is a perspective view showing a state in which the lid 8 is in an opening position in the container 100 with a cap. FIG. 3 is a cross-sectional view showing a state in which the lid 8 is in a closing position in a container 100 with a cap. FIG. 4 is a cross-sectional view showing a state in which the lid 8 is in the opening position in a container 100 with a cap. FIG. 5 is an exploded perspective view of the cap unit 1 as viewed from above. FIG. 6 is an exploded perspective view of the cap unit 1 as viewed from below. FIG. 7 is a cross-sectional perspective view showing a state in which the lid 8 is between the closing position and the opening position in a cross section of the cap unit 1 shown by a line C-C in FIGS. 3 and 4. FIG. 8 is a cross-sectional perspective view showing a state in which the lid 8 is in the closing position in a cross section of the cap unit 1 shown by the line C-C in FIG. 3. FIG. 9 is a cross-sectional perspective view showing a state in which the lid 8 is in the opening position in a cross section of the cap unit 1 shown by the line C-C in FIG. 4.

As shown in FIGS. 1 to 4, the container 100 with a cap of the present embodiment includes the cap unit 1 of the present embodiment and a container body 2 to which the cap unit 1 can be detachably attached. The container 100 with a cap is a tumbler (beverage container) capable of keeping the beverage (contents) contained in the container body 2 warm or cold by the container body 2 having a vacuum heat insulating structure.

Specifically, the container body 2 includes an outer container 3 and an inner container 4 which have a bottomed cylindrical shape, and is made of, for example, stainless steel. The container body 2 has a double structure in which the inner container 4 is housed inside the outer container 3 and the mouth portions thereof are joined to each other. Further, a vacuum heat insulating layer 5 is provided between the outer container 3 and the inner container 4. The vacuum heat insulating layer 5 can be formed, for example, by closing a degassing hole provided in the center of the bottom surface of the outer container 3 in a chamber decompressed (evacuated) to a high vacuum.

The container body 2 includes a bottom surface 2a having a substantially circular shape, and a body portion 2b which rises substantially cylindrically from the outer periphery of the bottom surface 2a. An upper end portion of the body portion 2b is opened in a circular shape as the upper opening portion 2c of the container body 2.

The container 100 with a cap of the present embodiment has a substantially cylindrical shape as a whole, but the shape of the container 100 with a cap is not particularly limited thereto. The shape of the container 100 with a cap can be changed as appropriate according to the size and design. Further, the outer peripheral surface of the container body 2 may be painted or printed.

The configuration of the cap unit 1 of the present embodiment will be disclosed with reference to FIGS. 3 to 9.
In the following description, in the cap unit 1, a side of the cap unit 1 at which a liquid passage port 6 is provided is referred to as the "front side", and a side opposite to the side at which the liquid passage port 6 is provided is referred to as the "rear side".

As shown in FIGS. 3 to 6, the cap unit 1 of the present embodiment is a plug which closes the upper opening 2c of the container body 2. The cap unit 1 includes a cap body 7 which closes the upper opening 2c of the container body 2 and is provided with a liquid passage port 6 in an upper part on the front side, a lid 8 which opens and closes the liquid passage port 6 while being slidably attached to the cap body 7 in a front-rear direction of the cap body 7, and a lid opening/closing mechanism 9 which holds the lid 8 which slides between a closing position at which the lid 8 closes the liquid passage port 6 and an opening position at which the lid 8 opens the liquid passage port 6 in the closing position and the opening position.

The cap body 7 is made of a heat-resistant resin such as polypropylene (PP) or polymethylpentene (PMP). The cap body 7 includes a peripheral wall portion 7a having a substantially cylindrical shape, an upper wall portion 7b having a substantially disk-shape which covers the upper portion of the peripheral wall portion 7a, an upper edge portion 7c which protrudes upward from the periphery of the upper wall portion 7b, an upper flange portion 7d protruding outward from the periphery of the upper edge portion 7c, and a lower flange portion 7e protruding outward from the periphery of the lower end side of the peripheral wall portion 7a.

The cap body 7 closes the upper opening 2c of the container body 7 by contacting the lower surface of the upper flange portion 7d with the upper end portion of the container body 2 in a state in which the peripheral wall portion 7a is fitted inside the container body 2 from the upper opening 2c of the container body 2.

A waterproof packing 10 is detachably attached to the peripheral wall portion 7a of the cap body 7. The waterproof packing 10 is a ring-shaped sealing member for sealing between the cap body 7 and the container body 2. The waterproof packing 10 is made of an elastic member such as a heat-resistant rubber or elastomer such as silicone rubber.

Correspondingly, a fitting recess 7f into which the waterproof packing 10 is fitted is provided on the outer peripheral portion of the peripheral wall portion 7a. The fitting recess 7f is provided in a ring shape between the upper flange portion 7d and the lower flange portion 7e.

On the other hand, a pinching piece 10a projecting in the diameter reduction direction is provided on the inner peripheral portion of the waterproof packing 10. Correspondingly, the cap body 7 is provided with a notch portion 7g which cuts out a part of the rear end side of the lower flange portion 7e. The waterproof packing 10 is fitted inside the fitting recess 7f so that the pinching piece 10a is located inside the notch 7g.

The water-stopping packing 10 can be removed from the fitting recess 7f (cap body 7) by elastically deforming (pulling and stretching) itself in a state at which the pinched piece 10a is pinched. As a result, the waterproof packing 10 and the cap body 7 can be cleaned separately, and the space between the waterproof packing 10 and the fitting recess 7f (cap body 7) can be kept hygienic.

Further, an elastic flange portion 10b is provided on the outer peripheral surface of the waterproof packing 10 so as to project over the entire circumference in the diameter-expanding direction. When the peripheral wall portion 7a of the cap body 7 is fitted inside the container body 2, the waterproof packing 10 is elastically deformed, and in close contact with the inner peripheral surface of the inner container 4 (container body 2) over the entire circumference. As a result, the space between the cap body 7 and the container body 2 can be liquid-tightly sealed (water-stopped).

The lid 8 is made of a heat-resistant resin such as polypropylene (PP) or polymethylpentene (PMP). The lid 8 has a substantially flat plate shape extending in the front-rear direction. Further, the lid 8 has a symmetrical shape in the front-rear direction and the left-right (width) direction.

Correspondingly, the cap body 7 is provided with a guide recess 11 which cuts out the upper wall portion 7b including the liquid passage port 6 in the front-rear direction with a width corresponding to the width of the lid 8. Further, the guide recess 11 has a symmetrical shape in the front-rear direction thereof.

The liquid passage port 6 is located on the front side of the guide recess 11, and is provided so as to penetrate the bottom surface of the guide recess 11 in the thickness direction. Specifically, the liquid passage port 6 has a shape which has a width corresponding to the width of the bottom surface of the guide recess 11 from a position along the inner peripheral surface on the front side of the upper edge portion 7c toward the rear, and becomes narrower than the width of the bottom surface of the guide recess 11 in the middle. The length A of the narrowly opened portion is longer than the length B of the portion having the width corresponding to the width of the bottom surface of the guide recess 11 (A> B). Since the narrowly opened portion abuts on the bottom surface of the lid 8, the sliding operation of the lid 8 becomes smooth, and it is possible to prevent the lid 8 from falling out to the inside of the liquid passage port 6.

By arranging the lid 8 inside the guide recess 11, the lid 8 is slidably attached in the front-rear direction of the cap body 7 along the guide recess 11. Further, the lid 8 has a symmetrical shape in the front-rear direction, so that the lid 8 can be freely attached to the guide recess 11 in the front-rear direction.

Further, the lid 8 has a shape which is flush with the cap body 7 in a state of being arranged inside the guide recess 11. Specifically, the upper surface of the upper wall portion 7b is curved in a concave shape from the central portion to the outer peripheral portion. Along with the shape of the upper wall portion 7b, the bottom surface of the guide recess 11 is also concavely curved in the front-rear direction. On the other hand, the lid 8 has a shape curved upward in the front-rear direction in accordance with the shapes of the upper surface of the upper wall portion 7b and the bottom surface of the guide recess 11.

The lid 8 closes the liquid passage port 6 at the closing position, and opens the liquid passage port 6 in a state in which the lid 8 partially overlaps the liquid passage port 6 at the opening position. Thereby, in the cap unit 1 of the present embodiment, it is possible to easily remove the lid 8 from the inside of the guide recess 11 by the front end portion of the lid 8 which partially overlaps with the liquid passage port 6 in the opening position.

An operation convex portion 12 for opening/closing the lid 8 is provided on the upper portion of the lid 8. The operation convex portion 12 is provided so as to project upward while extending the central portion of the lid 8 in the width direction. In the cap unit 1 of the present embodiment, the lid 8 can be easily slid in the front-rear direction via the operation convex portion 12.

The lid opening/closing mechanism 9 includes a pair of plungers 13 protruding from both sides in the width direction of the lid 8, and a pair of guide grooves 14 which are formed on both sides of the cap body 7 in the width direction of the lid 8, and slidably guide the lid 8 in the front-rear direction of the cap body 7 in a state in which the pair of plungers 13 are detachably engaged with the pair of guide grooves 14.

The pair of plungers 13 can push a ball (or a pin) inward against the urging of a spring while urging the ball (or the pin) which is provided at the end portion by a spring provided inside the pair of plungers 13. The pair of plungers 13 are located at the center of the lid 8 and are attached with balls (or pins) protruding from both side surfaces in the width direction of the lid 8.

The pair of guide grooves 14 are located at the center of the guide recess 11, and are cut out in the front-rear direction along both side surfaces in the width direction of the guide recess 11.

In the lid opening/closing mechanism 9, when the lid 8 is fitted into the guide recess 11 from the upper part of the cap body 7, the pair of plungers 13 are engaged with the pair of guide grooves 14. In this state, the lid 8 arranged inside the guide recess 11 can be slidably held in the front-rear direction.

Since the engagement width between the pair of plungers 13 and the pair of guide grooves 14 is wider than the width of the gap between the lid 8 and the side surfaces of the guide recess 11, the pair of plungers 13 are securely engaged with the pair of guide grooves 14.

In addition, in the lid opening/closing mechanism 9, no matter the location of the lid 8 inside the guide recess 11, the lid 8 can be removed from the inside of the guide recess 11 by disengaging the pair of plungers 13 with the pair of guide grooves 14.

Further the lid opening/closing mechanism 9 includes a pair of front locking portions 15a which are located on the front end side of the pair of guide grooves 14 and lock the pair of plungers 13, and a pair of rear locking portions 15b which are located on the rear end side of the pair of guide grooves 14 and lock the pair of plungers 13.

The front locking portion 15a and the rear locking portion 15b are recesses for locking the plunger 13 which are formed by dividing a part of the front end side and the rear end side of the guide groove 14 with protrusions protruding from the inside of the guide groove 14.

After the pair of plungers 13 guided by the pair of guide grooves 14 pass over the protrusions as shown in FIG. 7, the pair of plungers 13 are locked in the pair of front locking portions 15a, and the lid 8 is held at the closing position as shown in FIG. 8.

On the other hand, after the pair of plungers 13 guided by the pair of guide grooves 14 pass over the protrusions as shown in FIG. 7, the pair of plungers 13 are locked in the pair of rear locking portions 15b, and the lid 8 is held at the opening position shown in FIG. 9.

In the container 100 with a cap of the present embodiment, when the container body 2 is tilted forward, the beverage (contents) flowing out from the container body 2 through the liquid passage port 6 can be drunk on the front side of the upper edge portion 7c as a lip.

As disclosed above, since the cap unit of the present embodiment includes the lid opening/closing mechanism 9, it is possible to easily attach/detach the lid 8 to/from the cap body 7 while having a simple structure.

Specifically, in the cap unit 1, when the pair of plungers 13 are engaged with the pair of guide grooves 14 in the lid opening closing mechanism 9 disclosed above, the lid 8 arranged inside the guide recess 11 can be held slidably in the front-rear direction. On the other hand, the lid 8 can be easily removed from any position from the inside of the guide recess 11 by releasing the engagement of the pair of plungers 13 with the pair of guide grooves 14.

Further, in the cap unit 1 of the present embodiment, the cap body 7 and lid 8 can be washed separately, and the space between the cap body 7 and the lid 8 can be kept hygienic.

Further, in the container 100 with a cap of the present embodiment, the lid 8 can be easily opened and closed with one hand by providing such a cap unit 1 while the container body 2 is being gripped, so that the usability is further improved.

The present invention is not necessarily limited to the embodiments, and various modifications can be made without departing from the present invention as defined by the appended claims. For example, in the lid opening/closing mechanism 9 above, a pair of plungers 13 located at the center of the lid 8 are provided so as to project from both sides in the width direction of the lid 8. However, in an embodiment which is not comprised with the scope of the present invention as defined by the appended claims, the pair of plungers 13 may be provided on both sides of the lid 8 in the front-rear direction.

In the case of such a configuration, the guide groove 14, the front locking portion 15a, and the rear locking portion 15b may be provided in accordance with the front plunger 13, and the guide groove 14, the front locking portion 15a, and the rear locking portion 15b may be provided in accordance with the rear plunger 13.

In the embodiment above, the upper surface of the upper wall portion 7b and the lid 8 have a shape which is concavely curved from the central portion toward the outer peripheral portion. However, the upper surface of the upper wall portion 7b and the lid 8 may have a flat shape, or may have a shape inclined to the front side or the rear side.

In some embodiments, the cap unit of the present invention can be applied to a tumbler (beverage container) having a heat/cold insulating function by the container body 2 having the vacuum heat insulating structure disclosed above.

### Explanation of reference numerals

- 1: cap unit
- 2: container body
- 3: outer container
- 4: inner container
- 5: vacuum heat insulating layer
- 6: liquid passage port
- 7: cap body
- 8: lid
- 9: lid opening/closing mechanism
- 10: waterproof packing
- 11: guide recess
- 12: operation convex portion
- 13: plunger
- 14: guide recess
- 15a: front locking portion
- 15b: rear locking portion

## Claims

1. A cap unit (1) which can be detachably attached to a container body (2) with an upper opening, including:
a cap body (7) which closes the upper opening of the container body (2) and is provided with a liquid passage port (6) in an upper part on the front side;
a lid (8) which opens and closes the liquid passage port (6) while being slidably attached to the cap body (7), wherein the lid (8) is arranged so as to slide in a front-rear direction of the cap body (7); and
a lid opening/closing mechanism (9) which holds the lid (8) which slides between a closing position at which the lid (8) closes the liquid passage port (6) and an opening position at which the lid (8) opens the liquid passage port (6),
wherein the lid opening/closing mechanism (9) comprises:
a pair of plungers (13) protruding from both sides in the width direction of the lid (8); and
a pair of guide grooves (14) which are located on both sides of the cap body (7) in a width direction sandwiching the lid (8), and slidably guide the cap body (7) in a state in which the pair of plungers (13) are detachably engaged with the pair of guide grooves,
**characterized in that** the lid opening/closing mechanism (9) comprises a pair of front locking portions (15a) which are located on a front end side of the pair of guide grooves (14) and lock the pair of plungers (13), and a pair of rear locking portions (15b) which are located on a rear end side of the pair of guide grooves (14) and lock the pair of plungers (13),
the lid (8) is held at the closing position by locking the pair of plungers (13) in the front locking portions (15a), and
the lid (8) is held at the opening position by locking the pair of plungers (13) in the rear locking portions (15b).

2. The cap unit (1) according to claim 1, wherein the cap body (7) comprises a guide recess (11) which cuts out an upper portion of the lid (8) including the liquid passage port (6) in the front-rear direction with a width corresponding to the width of the lid (8), and the lid (8) is slidably attached in the front-rear direction of the cap body (7) while being arranged in the guide recess (11).

3. The cap unit (1) according to claim 2, wherein the lid (8) has a shape which is flush with the cap body (7) in a state of being arranged inside the guide recess (11).

4. The cap unit (1) according to claim 2, wherein the liquid passage port (6) has a shape which has a width corresponding to a width of a bottom surface of the guide recess (11), becomes narrower than the width of the bottom surface of the guide recess (11) in the middle, and a length of the narrowly opened portion is longer than a length of the portion having the width corresponding to the width of the bottom surface of the guide recess (11).

5. The cap unit (1) according to claim 2, wherein the lid (8) is slid by an operation convex portion which is provided on the upper portion of the lid (8).

6. The cap unit (1) according to claim 1, wherein the lid (8) is partially overlapped with the liquid passage port (6) at the opening position.

7. The cap unit (1) according to claim 2, wherein the lid (8) has a symmetrical shape in the front-rear direction, and the lid (8) is freely attached to the guide recess (11) in the front-rear direction.

8. A container with a cap including the cap unit (1) according to any one of claims 1 to 7, and a container body (2) to which the cap unit (1) is attached.

9. The container with a cap according to claim 8, wherein the container body (2) has a vacuum heat insulating structure.

## Patentansprüche

1. Verschlusseinheit (1), die lösbar an einem Behälterkörper (2) mit einer oberen Öffnung befestigt werden kann, einschließlich:
einen Verschlusskörper (7), der die obere Öffnung des Behälterkörpers (2) verschließt und mit einem Flüssigkeitsdurchlassanschluss (6) in einem oberen Teil an der Vorderseite versehen ist;
einen Deckel (8), der den Flüssigkeitsdurchlassanschluss (6) öffnet und schließt, während er gleitend an dem Verschlusskörper (7) befestigt ist, wobei der Deckel (8) so angeordnet ist, dass er in eine vordere-hintere Richtung des Verschlusskörpers (7) gleitet; und
einen Deckelöffnungs-/-schließmechanismus (9), der den Deckel (8) hält, der zwischen einer Schließposition, an der der Deckel (8) den Flüssigkeitsdurchlassanschluss (6) schließt, und einer Öffnungsposition, an der der Deckel (8) den Flüssigkeitsdurchlassanschluss (6) öffnet, gleitet,
wobei der Deckelöffnungs-/-schließmechanismus (9) Folgendes umfasst:
ein Paar Kolben (13), die von beiden Seiten in Breitenrichtung des Deckels (8) hervorstehen; und
ein Paar Führungsnuten (14), die sich auf beiden Seiten des Verschlusskörpers (7) in einer Breitenrichtung befinden, den Deckel (8) umschließen und den Verschlusskörper (7) in einem Zustand, in dem das Paar Kolben (13) lösbar mit dem Führungsnutenpaar in Eingriff ist, verschiebbar führen,
**dadurch gekennzeichnet, dass** der Deckelöffnungs-/-schließmechanismus (9) ein Paar vorderer Verriegelungsabschnitte (15a) umfasst, die sich an einer vorderen Endseite des Paars von Führungsnuten (14) befinden und das Paar Kolben (13) verriegeln, und ein Paar hinterer Verriegelungsabschnitte (15b), die sich an einer hinteren Endseite des Paars von Führungsnuten (14) befinden und das Paar Kolben (13) verriegeln,
der Deckel (8) in der Schließposition gehalten wird, indem das Kolbenpaar (13) in den vorderen Verriegelungsabschnitten (15a) verriegelt wird, und
der Deckel (8) in der Öffnungsposition gehalten wird, indem das Kolbenpaar (13) in den hinteren Verriegelungsabschnitten (15b) verriegelt wird.

2. Verschlusseinheit (1) nach Anspruch 1, wobei der Verschlusskörper (7) eine Führungsaussparung (11) umfasst, die einen oberen Teil des Deckels (8) einschließlich des Flüssigkeitsdurchgangsanschlusses (6) in der vorderen-hinteren Richtung mit einer Breite ausschneidet, die der Breite des Deckels (8) entspricht, und
der Deckel (8) in vorderer-hinterer Richtung des Verschlusskörpers (7) verschiebbar befestigt ist, während er in der Führungsaussparung (11) angeordnet ist.

3. Verschlusseinheit (1) nach Anspruch 2, wobei der Deckel (8) eine Form aufweist, die mit dem Verschlusskörper (7) in einem Zustand bündig ist, in dem er in der Führungsaussparung (11) angeordnet ist.

4. Verschlusseinheit (1) nach Anspruch 2, wobei die Flüssigkeitsdurchlassöffnung (6) eine Form aufweist, die eine Breite aufweist, die einer Breite einer Bodenfläche der Führungsaussparung (11) entspricht, in der Mitte schmaler wird als die Breite der Bodenfläche der Führungsaussparung (11), und eine Länge des schmal geöffneten Abschnitts länger ist als eine Länge des Abschnitts, der die Breite aufweist, die der Breite der Bodenfläche der Führungsaussparung (11) entspricht.

5. Verschlusseinheit (1) nach Anspruch 2, wobei der Deckel (8) durch einen Betriebskonvexabschnitt geschoben wird, der an dem oberen Abschnitt des Deckels (8) bereitgestellt ist.

6. Verschlusseinheit (1) nach Anspruch 1, wobei der Deckel (8) an der Öffnungsposition teilweise mit der Flüssigkeitsdurchlassöffnung (6) überlappt.

7. Verschlusseinheit (1) nach Anspruch 2, wobei der Deckel (8) in vorderer-hinterer Richtung symmetrisch geformt ist und der Deckel (8) in vorderer-hinterer Richtung frei an der Führungsaussparung (11) befestigt ist.

8. Behälter mit einem Verschluss einschließlich der Verschlusseinheit (1) nach einem der Ansprüche 1 bis 7 und einem Behälterkörper (2), an dem die Verschlusseinheit (1) befestigt ist.

9. Behälter mit einem Verschluss nach Anspruch 8, wobei der Behälterkörper (2) eine vakuumwärmeisolierende Struktur aufweist.

## Revendications

1. Unité (1) de capuchon qui peut être fixée de manière détachable à un corps (2) de récipient avec une ouverture supérieure, incluant :
un corps (7) de capuchon qui ferme l'ouverture supérieure du corps (2) de récipient et est pourvu d'un orifice (6) de passage de liquide dans une partie supérieure sur le côté avant ;
un couvercle (8) qui ouvre et ferme l'orifice (6) de passage de liquide tout en étant fixé de manière coulissante au corps (7) de capuchon, dans laquelle le couvercle (8) est agencé de manière à coulisser dans une direction avant-arrière du corps (7) de capuchon ; et
un mécanisme (9) d'ouverture/fermeture de couvercle qui maintient le couvercle (8) qui coulisse entre une position de fermeture dans laquelle le couvercle (8) ferme l'orifice (6) de passage de liquide et une position d'ouverture dans laquelle le couvercle (8) ouvre l'orifice (6) de passage de liquide,
dans laquelle le mécanisme (9) d'ouverture/fermeture de couvercle comprend :
une paire de plongeurs (13) faisant saillie des deux côtés dans la direction de largeur du couvercle (8) ; et
une paire de rainures (14) de guidage qui sont situées des deux côtés du corps (7) de capuchon dans une direction de largeur prenant le couvercle (8) en sandwich, et guident de manière coulissante le corps (7) de capuchon dans un état dans lequel la paire de plongeurs (13) est en prise de manière détachable avec la paire de rainures de guidage,
**caractérisée en ce que** le mécanisme (9) d'ouverture/fermeture de couvercle comprend une paire de parties de verrouillage avant (15a) qui sont situées sur un côté d'extrémité avant de la paire de rainures (14) de guidage et verrouillent la paire de plongeurs (13), et une paire de parties de verrouillage arrière (15b) qui sont situées sur un côté d'extrémité arrière de la paire de rainures (14) de guidage et verrouillent la paire de plongeurs (13),
le couvercle (8) est maintenu dans la position de fermeture par verrouillage de la paire de plongeurs (13) dans les parties de verrouillage avant (15a), et
le couvercle (8) est maintenu dans la position d'ouverture par verrouillage de la paire de plongeurs (13) dans les parties de verrouillage arrière (15b).

2. Unité (1) de capuchon selon la revendication 1, dans laquelle le corps (7) de capuchon comprend un évidement (11) de guidage qui découpe une partie supérieure du couvercle (8) incluant l'orifice (6) de passage de liquide dans la direction avant-arrière avec une largeur correspondant à la largeur du couvercle (8), et
le couvercle (8) est fixé de manière coulissante dans la direction avant-arrière du corps (7) de capuchon tout en étant agencé dans l'évidement (11) de guidage.

3. Unité (1) de capuchon selon la revendication 2, dans laquelle le couvercle (8) présente une forme qui est à fleur du corps (7) de capuchon dans un état d'agencement à l'intérieur de l'évidement (11) de guidage.

4. Unité (1) de capuchon selon la revendication 2, dans laquelle l'orifice (6) de passage de liquide présente une forme qui a une largeur correspondant à une largeur d'une surface inférieure de l'évidement (11) de guidage, devient plus étroite que la largeur de la surface inférieure de l'évidement (11) de guidage au milieu, et une longueur de la partie étroitement ouverte est plus longue qu'une longueur de la partie présentant la largeur correspondant à la largeur de la surface inférieure de l'évidement (11) de guidage.

5. Unité (1) de capuchon selon la revendication 2, dans laquelle le couvercle (8) est glissé par une partie convexe d'opération qui est prévue sur la partie supérieure du couvercle (8).

6. Unité (1) de capuchon selon la revendication 1, dans laquelle le couvercle (8) chevauche partiellement l'orifice (6) de passage de liquide dans la position d'ouverture.

7. Unité (1) de capuchon selon la revendication 2, dans laquelle le couvercle (8) présente une forme symétrique dans la direction avant-arrière, et le couvercle (8) est fixé librement à l'évidement (11) de guidage dans la direction avant-arrière.

8. Récipient avec un capuchon incluant l'unité (1) de capuchon selon l'une quelconque des revendications 1 à 7, et un corps (2) de récipient auquel l'unité (1) de capuchon est fixée.

9. Récipient avec un capuchon selon la revendication 8, dans lequel le corps (2) de récipient présente une structure d'isolation thermique sous vide.
